# EUROPEAN PATENT SPECIFICATION

(11) **EP 3 136 502 B1**
(45) Date of publication and mention of the grant of the patent: **11.09.2019**
(21) Application number: 14893099.3
(22) Date of filing: 25.07.2014
(51) Int. Cl.: H04B 5/00

(54) **NEAR FIELD COMMUNICATION ANTENNA DEVICE**
NAHFELDKOMMUNIKATIONSANTENNENVORRICHTUNG
DISPOSITIF D'ANTENNE DE COMMUNICATION EN CHAMP PROCHE

(30) Priority: 29.05.2014 CN 201420283701 U
(43) Date of publication of application: 01.03.2017
(73) Proprietor: ZTE Corporation, Shenzhen, Guangdong 518057 (CN)
(72) Inventor: WANG, Kai, Shenzhen Guangdong 518057 (CN)
(74) Representative: Regimbeau
(86) International application number: PCT/CN2014/083063
(87) International publication number: WO 2015/180254

(56) References cited:
- EP-A2- 2 772 987
- WO-A1-2014/002373
- CN-A- 103 425 949
- CN-U- 203 351 736
- CN-U- 203 351 748
- US-A1- 2003 142 032
- US-B2- 7 653 296

## Description

### TECHNICAL FIELD

This disclosure relates to the field of mobile terminals, and more particularly to a near field communication (Near Field Communication, NFC) antenna device.

### BACKGROUND

Currently, most mobile phones or mobile terminals of other types support NFC functionality. As for a terminal supporting the NFC functionality, a planar coil antenna would be commonly affixed on a backside housing of the terminal or a battery panel, so as to serve as an NFC antenna. Near field communication between an NFC antenna coil and a POS is achieved through electromagnetic coupling. The NFC antenna coil is generally arranged to be parallel to and very close to a terminal circuit board. If the circuit board of a metal material is too close to the NFC antenna, energy of the electromagnetic coupling would be severely weakened, communication performance between the NFC antenna and a POS device would be affected and thus card-swiping effect is affected.

Additionally, the NFC antenna occupies a large area, which is generally 3cm^{∗}3cm, and is affixed on the backside of the terminal or the battery panel in form of a cured Flexible Printed Circuit (FPC), so that horizontal height of the NFC antenna cannot be adjusted. Particularity of the NFC antenna makes people have no option but to consider a problem of mutual interference and electromagnetic compatibility between the NFC antenna and other components on the circuit board at beginning of design. In terms of current arrangement methods of the NFC antenna, there is no substantially great change to influence on the electromagnetic coupling. US 2013142032 A1 discloses an image capturing device comprising a body, a lens apparatus extending from the body, and an antenna formed as part of the lens apparatus. The lens apparatus may be fixed with respect to the body, or may retract at least partially into the body.

### SUMMARY

In order to solve the above problem, the present disclosure is mainly to provide an NFC antenna device.

Technical solutions of this disclosure are achieved as follows.

The present disclosure provides an NFC antenna device, including: a camera lens rim and an NFC antenna; where the NFC antenna is provided at an outer edge on a top surface of the camera lens rim; and, a side wall of the camera lens rim is provided with a guide wire connecting the NFC antenna with a terminal circuit board; wherein, the camera lens rim comprises: an inner lens rim and an outer lens rim; wherein the inner lens rim is directly connected to the terminal circuit board via a structural member, and is fixed immovably; and, the outer lens rim is sleeved over the inner lens rim, and is higher than the inner lens rim, and the NFC antenna is provided at an outer edge on a top surface of the outer lens rim.

### BRIEF DESCRIPTION OF DRAWINGS

FIG. 1 is a structural diagram of an NFC antenna device according to an embodiment of the present invention;
FIG. 2 is a schematic diagram of a rotational connection structure for a camera lens rim according to Solution 1 in an embodiment of the present invention;
FIG. 3 is a schematic diagram of connection and rotational movements between an outer lens rim and an inner lens rim according to an embodiment of the present invention;
FIG. 4 is a side view of mutual connection between a camera lens rim and a terminal circuit board according to an embodiment of the present invention; and
FIG. 5 is a schematic structural diagram of a nested connection for a camera lens rim according to Solution 2 in an embodiment of the present invention.

### Reference numbers:

10, Camera lens rim; 11, NFC antenna; 12, Terminal circuit board; 13, Guide wire; 20, Outer lens rim; 21, Inner lens rim; 22, Vertical guide wires on an outer wall of an outer lens rim; 23, Threaded guide wires on an inner wall of an outer lens rim; 24, Threaded guide wires on an outer wall of an inner lens rim; 25, Vertical guide wires on an outer wall of an inner lens rim; 26, NFC signal point on a terminal circuit board; 30, Threaded ring; 50, Convex guide wires on the inner wall of the outer lens rim; 51, Concave guide wires on the outer wall of the inner lens rim; 52, Small motor; 53, Spindle or driving head; 54, Pulley.

### DETAILED DESCRIPTION

Embodiments of the present invention provide an NFC antenna device, including: a camera lens rim and an NFC antenna; where, the NFC antenna is provided at an outer edge on a top surface of the camera lens rim; a side wall of the camera lens rim is provided with a guide wire connecting the NFC antenna with a terminal circuit board.

An initiating device and a target device of NFC communication are mutually coupled via an alternating current magnetic field. Since the terminal circuit board would have an electromagnetic influence on a NFC antenna coil, the circuit board would weaken energy of electromagnetic coupling between the NFC antenna coil and a POS device (or other NFC devices) during operation of the NFC antenna if the terminal circuit board is too close to the NFC antenna coil, so that communication performance of the NFC is affected. Therefore, a solution proposed in the present disclosure can adjust a distance between the NFC antenna and the circuit board, so as to improve communication performance of the NFC.

Hereinafter, the present disclosure will be described in detail through the accompany drawings and the specific embodiments.

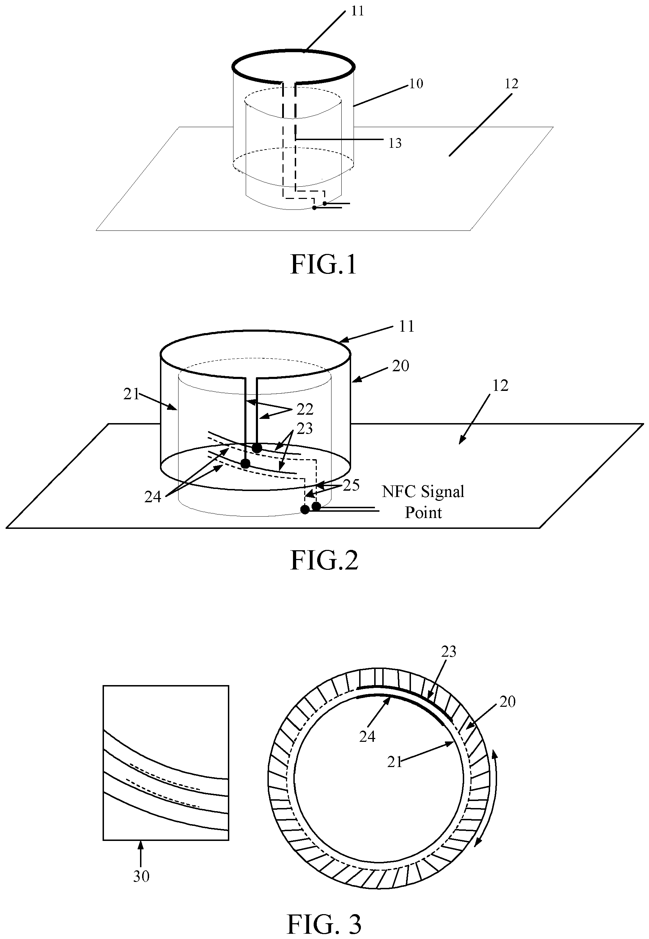

A overall structure of an NFC antenna device implemented in embodiments of the present invention is as shown in FIG. 1, which includes: a camera lens rim 10 and an NFC antenna 11; reference number 12 in the figure refers to a terminal circuit board; the NFC antenna 11 is provided at the outer edge on the top surface of the camera lens rim, and is represented by bold lines in the figure; the side wall of the camera lens rim is provided with a guide wire 13 (represented by dashed lines); and the NFC antenna 11 with the terminal circuit board 12 are connected via the guide wire 13; where the guide wire 13 in FIG. 13 only schematically connects the NFC antenna 11 and the terminal circuit board 12, but is not intended to limit layout and lining manner of the guide wire 13.

FIG. 2 is a schematic diagram of a rotational connection structure for a camera lens rim in Solution 1; as shown in FIG. 2, the camera lens rim includes an outer lens rim 20 and an inner lens rim 21, the outer lens rim 20 is sleeved over the inner lens rim 21, and is slightly higher than the inner lens rim 21, and a height difference is determined by photographing demands; the NFC antenna 11 is provided at the outer edge on the top surface of the outer lens rim 20. The outer edge on the top surface of the outer lens rim is chosen to line the NFC antenna 11 so that size of the antenna and area of the coil can be as large as possible, so as to meet requirements to size of the NFC antenna 11; reference number 22 refers to two vertical guide wires provided on an outer wall of the outer lens rim, and the two guide wires 22 are two feeder terminals of the NFC antenna 11, reference number 23 refers to two threaded guide wires in the inner wall of the outer lens rim, which are extensions of the guide wires 22, and the guide wires 22 are connected to the two threaded guide wires 23 from the outer wall of the outer lens rim to the inner wall of the outer lens rim via a borehole; reference number 24 refers to two threaded guide wires in the outer wall of the inner lens rim (represented by dashed lines in FIG. 2), the threaded guide wire 23 in the inner wall of the outer lens rim and threaded guide wire 24 in the outer wall of the inner lens rim engage with each other through a rotational movement.

Reference number 25 refers to two vertical guide wires provided an outer wall of the inner lens rim, which are extensions of the threaded guide wires 24, and guide wires 25 are crimped together with an NFC signal point 26 on the terminal circuit board 12 via a connector; and such a crimping manner is more stable and reliable compared to traditional NFC contacting manners.

An NFC signal in FIG. 2 goes from the NFC antenna 11 to the guide wire 22, and then to the threaded guide wire 23, then by means of rotational engagement between the outer lens rim and the inner lens rim, to the threaded guide wire 24, and finally to the NFC signal point on the terminal circuit board 12 through the guide wire 25.

FIG. 3 is a schematic diagram of connection and rotational movements between an outer lens rim and an inner lens rim; reference number 30 in a left block refers to a threaded ring in the lens rim, and FIG. 3 merely shows a part of the threaded ring; in FIG. 3, dashed lines represent threaded guide wires; and, a figure on the right is a top view of the camera lens rim, reference numbers 20 and 21 refer to the outer lens rim and inner lens rim respectively; reference number 23 refers to the threaded guide wire in the inner wall of the outer lens rim and reference number 24 refers to the threaded guide wire in the outer wall of the inner lens rim; where lengths of the threaded guide wires in the outer lens rim and inner lens rim are determined by radiuses of the lens rims and allowable telescopic amount of the lens rims, which is not limited in the present disclosure.

The outer lens rim 20 is sleeved over the inner lens rim 21, the outer lens rim 20 is rotatable clockwise or anticlockwise, telescopic amount of the outer lens rim 20 is adjusted through rotation and there is a certain rotational stroke as long as a rotational arc does not exceed an arc length of the threaded guide wire 23 or 24, and the threaded guide wire 23 on the outer lens rim 20 would lose an electrical connection with the threaded guide wire 24 on the inner lens rim 21 if the rotational arc exceeds the arc length of the threaded guide wire 23 or 24.

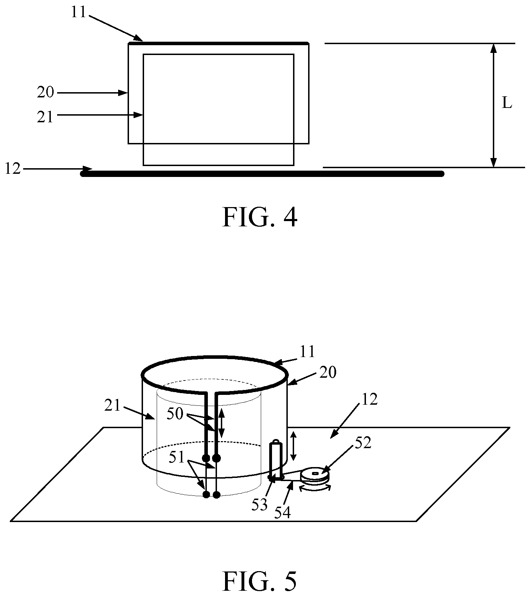

FIG. 4 is a side view of connection between a camera lens rim and a terminal circuit board; in the figure, reference number 20 refers to the outer lens rim, reference number 21 refers to the inner lens rim, a bold line on the top surface of the outer lens rim 20 is the NFC antenna 11, reference number 12 refers to the terminal circuit board, an L refers to a vertical distance between the NFC antenna 11 and the terminal circuit board 12. If the outer lens rim 20 is rotated anticlockwise along a common thread direction, then the outer lens rim 20 extends outward, that is, the NFC antenna 11 is away from the terminal circuit board 12; conversely, if the outer lens rim 20 is rotated clockwise, then the outer lens rim 20 is retracted, that is, the NFC antenna 11 gets close to the terminal circuit board 12; the outer lens rim 20 extends and retracts through rotation of the outer lens rim 20, so as to realize change of a distance between the NFC antenna 11 and the terminal circuit board 12, and such a change of distance would change efficiency and resonant frequency of the NFC antenna 11, so that electromagnetic influence of the circuit board to the NFC antenna is reduced and communication performance of the NFC is improved.

FIG. 5 is a schematic structural diagram of a nested connection for a camera lens rim according to Solution 2 of the present disclosure, and is another evolution of the rotational connection in Solution 1 shown in FIG. 2;

As shown in FIG. 5, reference number 20 refers to an outer lens rim and reference number 21 refers to an inner lens rim, the outer lens rim 20 is sleeved over the inner lens rim 21 and is slightly higher than the inner lens rim 21; the NFC antenna 11 is lined at the outer edge on the top surface of the outer lens rim 20; an inner wall of the outer lens rim is provided with two vertical convex guide wires 50, which are two feeder terminals of the NFC antenna 11; an outer wall of the inner lens rim is provided with two vertical concave guide wires 51, which are crimped together with an NFC signal point on the terminal circuit board 12 via a connector.

A nested connection is achieved by wedging the convex guide wire 50 into the concave guide wire 51, such a connecting manner is similar to an engagement between a railway track and a wheel; when the outer lens rim 20 and the inner lens rim 21 adopt such a nested connection manner, the outer lens rim 20 cannot make rotational movements but only move up and down.

As shown in FIG. 5, the device further includes a small motor 52, a spindle or a driving head 53. A pulley 54 connects the motor 52 and the spindle (or the driving head) 53, the small motor 52 drives the spindle (or the driving head) 53 via the pulley 54 during rotation, and then drives the outer lens rim 20 to move up and down. When the outer lens rim 20 moves, the distance between the NFC antenna 11 and the terminal circuit board 12 is then changed. A distance moving upward does not exceed a length of the convex guide wire or concave guide wire; otherwise, the connection would be broken.

In the above embodiments, all the NFC antennas are arranged at the outer edge on the top surface of the outer lens rim, the outer lens rim extends and retracts or moves up and down directly through rotation, and the inner lens rim is fixed immovably; however, as for most of cameras currently, the inner lens rim extends and retracts, and the outer lens rim is fixed immovably; if so, an effect of adjusting the distance between the NFC antenna and the terminal circuit board also can be achieved if the NFC antenna is arranged at the outer edge on the top surface of the inner lens rim.

The NFC antenna device according to the present disclosure includes: a camera lens rim and an NFC antenna; where the NFC antenna is provided at an outer edge on a top surface of the camera lens rim; a side wall of the camera lens rim is provided with a guide wire connecting the NFC antenna with a terminal circuit board. By arranging the NFC antenna on a larger camera lens rim, such a larger camera and the NFC antenna are applicable to terminal products such as mobile phones and tablet computers; and, the distance between the NFC antenna and the terminal circuit board is adjusted by adjusting the distance between the inner lens rim and outer lens rim, thereby optimizing performance of the NFC antenna.

### INDUSTRIAL APPLICABILITY

In view of the above, the NFC antenna device according to the present disclosure can utilize telescoping of a camera lens rim, to change the distance of the NFC antenna the circuit board, so as to change efficiency and resonant frequency of the NFC antenna and improve card-swiping performance.

## Claims

1. A near field communication NFC antenna device, comprising: a camera lens rim (10) and an NFC antenna (11); wherein, the NFC antenna (11) is provided at an outer edge on a top surface of the camera lens rim (10); and, a side wall of the camera lens rim (10) is provided with a guide wire (13) connecting the NFC antenna (11) with a terminal circuit board (12); **characterised in that**
the camera lens rim (10) comprises: an inner lens rim (21) and an outer lens rim (20); wherein the inner lens rim (21) is directly connected to the terminal circuit board (12) via a structural member, and is fixed immovably; and, the outer lens rim (20) is sleeved over the inner lens rim (21), and is higher than the inner lens rim (21), and the NFC antenna (11) is provided at an outer edge on a top surface of the outer lens rim (20).

2. The NFC antenna device according to claim 1, wherein, the outer lens rim (20) and the inner lens rim (21) are provided with threads, the outer lens rim (20) is connected to the inner lens rim (21) via the threads, and the outer lens rim (20) rotates along the threads to adjust a telescopic amount.

3. The NFC antenna device according to claim 1, wherein, an outer wall of the outer lens rim (20) is provided with two vertical guide wires (22), to serve as two feeder terminals of an NFC antenna coil; an inner wall of the outer lens rim (20) is provided with two threaded guide wires (23); and, the two feeder terminals on the outer wall of the outer lens rim (20) are connected to the two threaded guide wires (23) in the inner wall of the outer lens rim (20) via a borehole.

4. The NFC antenna device according to claim 2, wherein, an outer wall of the inner lens rim (21) is provided with two threaded guide wires (24), which are interconnected with the two threaded guide wires (23) on the inner wall of the outer lens rim (20) through threaded rotation; the two threaded guide wires (24) on the outer wall of the inner lens rim (21) are provided with two extended guide wires, which are crimped together with a signal point (26) of the NFC antenna (11) on the terminal circuit board (12) via a connector.

5. The NFC antenna device according to claim 1, wherein, an inner wall of the outer lens rim (20) is provided with two vertical convex guide wires (50), to serve as two feeder terminals of the NFC antenna coil.

6. The NFC antenna device according to claim 1, wherein, an outer wall of the inner lens rim (21) is provided with two vertical concave guide wires (51), which are crimped together with a signal point (26) of the NFC antenna (11) on the terminal circuit board (12) via a connector.

7. The NFC antenna device according to claim 6, wherein, the convex guide wires (50) in the inner wall of the outer lens rim (20) is in nested connection with the concave guide wires (51) in the outer wall of the inner lens rim (21).

8. The NFC antenna device according to claim 7, further comprising: a small motor (52), a spindle or a driving head (53), and a pulley (54); wherein, the small motor (52) drives the spindle or the driving head (53) via the pulley (54), and the spindle or the driving head (53) drives the outer lens rim (20) to move up and down.

## Patentansprüche

1. Nahfeldkommunikation- (NFC-) Antennenvorrichtung umfassend: einen Kameraobjektivrand (10) und eine NFC-Antenne (11); wobei die NFC-Antenne (11) an einer äußeren Kante auf einer Oberseite des Kameraobjektivrandes (10) vorgesehen ist und eine Seitenwand des Kameraobjektivrandes (10) mit einem Führungsdraht (13) vorgesehen ist, der die NFC-Antenne (11) mit einer Anschlussleiterplatte (12) verbindet;
**dadurch gekennzeichnet, dass**
der Kameraobjektivrand (10) umfasst: einen inneren Objektivrand (21) und einen äußeren Objektivrand (20); wobei der innere Objektivrand (21) über ein Strukturelement direkt mit der Anschlussleiterplatte (12) verbunden und unverrückbar fixiert ist; und wobei der äußere Objektivrand (20) über den inneren Objektivrand (21) geschoben und höher als der innere Objektivrand (21) ist und die NFC-Antenne (11) an einer äußeren Kante auf einer Oberseite des äußeren Objektivrandes (20) vorgesehen ist.

2. NFC-Antennenvorrichtung nach Anspruch 1, wobei der äußere Objektivrand (20) und der innere Objektivrand (21) mit Gewinde versehen sind, wobei der äußere Objektivrand (20) über das Gewinde mit dem inneren Objektivrandes (21) verbunden ist und der äußere Objektivrand (20) sich entlang des Gewindes dreht, um einen teleskopischen Betrag anzupassen.

3. NFC-Antennenvorrichtung nach Anspruch 1, wobei eine Außenwand des äußeren Objektivrandes (20) mit zwei vertikalen Führungsdrähten (22) vorgesehen ist, die als zwei Einspeiseanschlüsse einer NFC-Antennenspule dienen; wobei eine Innenwand des äußeren Objektivrandes (20) mit zwei Gewindeführungsdrähten (23) vorgesehen ist; und wobei die beiden Einspeiseanschlüsse an der Außenwand des äußeren Objektivrandes (20) über eine Bohrung mit den beiden Gewindeführungsdrähten (23) in der Innenwand des äußeren Objektivrandes (20) verbunden sind.

4. NFC-Antennenvorrichtung nach Anspruch 2, wobei eine Außenwand des inneren Objektivrandes (21) mit zwei Gewindeführungsdrähten (24) vorgesehen ist, die gegenseitig mit den beiden Gewindeführungsdrähten (23) an der Innenwand des äußeren Objektivrandes (20) durch Gewindedrehung verbunden werden; wobei die beiden Gewindeführungsdrähte (24) an der Außenwand des inneren Objektivrandes (21) mit zwei verlängerten Führungsdrähten vorgesehen sind, die mit einem Signalpunkt (26) der NFC-Antenne (11) auf der Anschlussleiterplatte (12) über ein Anschlussstück zusammen gecrimpt sind.

5. NFC-Antennenvorrichtung nach Anspruch 1, wobei eine Innenwand des äußeren Objektivrandes (20) mit zwei vertikalen konvexen Führungsdrähten (50) vorgesehen ist, die als zwei Einspeiseanschlüsse der NFC-Antennenspule dienen.

6. NFC-Antennenvorrichtung nach Anspruch 1, wobei eine Außenwand des inneren Objektivrandes (21) mit zwei vertikalen konkaven Führungsdrähten (51) vorgesehen ist, die mit einem Signalpunkt (26) der NFC-Antenne (11) auf der Anschlussleiterplatte (12) über ein Anschlussstück zusammen gecrimpt sind.

7. NFC-Antennenvorrichtung nach Anspruch 6, wobei sich die konvexen Führungsdrähte (50) in der Innenwand des äußeren Objektivrandes (20) mit den konkaven Führungsdrähten (51) in der Außenwand des inneren Objektivrandes (21) in einer geschachtelten Verbindung befinden.

8. NFC-Antennenvorrichtung nach Anspruch 7, weiter umfassend: einen kleinen Motor (52), eine Spindel oder einen Antriebskopf (53) und eine Riemenscheibe (54); wobei der kleine Motor (52) die Spindel oder den Antriebskopf (53) über die Riemenscheibe (54) antreibt und die Spindel oder der Antriebskopf (53) den äußeren Objektivrand (20) derart antreibt, dass er sich nach oben und unten bewegt.

## Revendications

1. Dispositif d'antenne de communication en champ proche NFC, comprenant : une monture d'objectif de caméra (10) et une antenne NFC (11) ; dans lequel l'antenne NFC (11) est prévue au niveau d'un bord extérieur sur une surface supérieure de la monture d'objectif de caméra (10) ; et une paroi latérale de la monture d'objectif de caméra (10) est pourvue d'un câble de guidage (13) connectant l'antenne NFC (11) à une carte de circuit de bornes (12) ;
**caractérisé en ce que**
la monture d'objectif de caméra (10) comprend : une monture d'objectif intérieure (21) et une monture d'objectif extérieure (20) ; dans lequel la monture d'objectif intérieure (21) est directement connectée à la carte de circuit de bornes (12) par l'intermédiaire d'un élément structurel, et est fixée de manière inamovible ; et la monture d'objectif extérieure (20) est engagée sur la monture d'objectif intérieure (21), et est plus haute que la monture d'objectif intérieure (21), et l'antenne NFC (11) est prévue au niveau d'un bord extérieur sur une surface supérieure de la monture d'objectif extérieure (20).

2. Dispositif d'antenne NFC selon la revendication 1, dans lequel la monture d'objectif extérieure (20) et la monture d'objectif intérieure (21) sont pourvues de filets, la monture d'objectif extérieure (20) est reliée à la monture d'objectif intérieure (21) par l'intermédiaire des filets, et la monture d'objectif extérieure (20) tourne le long des filets pour ajuster une quantité télescopique.

3. Dispositif d'antenne NFC selon la revendication 1, dans lequel une paroi extérieure de la monture d'objectif extérieure (20) est pourvue de deux fils de guidage verticaux (22), pour servir en tant que deux bornes de dispositif d'alimentation d'une bobine d'antenne NFC ; une paroi intérieure de la monture d'objectif extérieure (20) est pourvue de deux fils de guidage hélicoïdaux (23) ; et les deux bornes de dispositif d'alimentation sur la paroi extérieure de la monture d'objectif extérieure (20) sont connectées aux deux fils de guidage hélicoïdaux (23) dans la paroi intérieure de la monture d'objectif extérieure (20) par l'intermédiaire d'un trou de perçage.

4. Dispositif d'antenne NFC selon la revendication 2, dans lequel une paroi extérieure de la monture d'objectif intérieure (21) est pourvue de deux fils de guidage hélicoïdaux (24), qui sont interconnectés avec les deux fils de guidage hélicoïdaux (23) sur la paroi intérieure de la monture d'objectif extérieure (20) par une rotation de vissage ; les deux fils de guidage hélicoïdaux (24) sur la paroi extérieure de la monture d'objectif intérieure (21) sont pourvus de deux fils de guidage étendus, qui sont connectés avec un point de signal (26) de l'antenne NFC (11) sur la carte de circuit de bornes (12) par l'intermédiaire d'un connecteur.

5. Dispositif d'antenne NFC selon la revendication 1, dans lequel une paroi intérieure de la monture d'objectif extérieure (20) est pourvue de deux fils de guidage convexes verticaux (50), pour servir en tant que deux bornes de dispositif d'alimentation de la bobine d'antenne NFC.

6. Dispositif d'antenne NFC selon la revendication 1, dans lequel une paroi extérieure de la monture d'objectif intérieure (21) est pourvue de deux fils de guidage concaves verticaux (51), qui sont connectés avec un point de signal (26) de l'antenne NFC (11) sur la carte de circuit de bornes (12) par l'intermédiaire d'un connecteur.

7. Dispositif d'antenne NFC selon la revendication 6, dans lequel les fils de guidage convexes (50) dans la paroi intérieure de la monture d'objectif extérieure (20) sont dans une connexion imbriquée avec les fils de guidage concaves (51) dans la paroi extérieure de la monture d'objectif intérieure (21).

8. Dispositif d'antenne NFC selon la revendication 7, comprenant en outre : un petit moteur (52), une broche ou une tête d'entraînement (53), et une poulie (54) ; dans lequel le petit moteur (52) entraîne la broche ou la tête d'entraînement (53) par l'intermédiaire de la poulie (54), et la broche ou la tête d'entraînement (53) entraîne la monture d'objectif extérieure (20) pour qu'elle se déplace vers le haut et vers le bas.
